# EUROPÄISCHE PATENTSCHRIFT

(11) **EP 4 172 571 B1**
(45) Veröffentlichungstag und Bekanntmachung des Hinweises auf die Patenterteilung: **07.08.2024**
(21) Anmeldenummer: 21743061.0
(22) Anmeldetag: 29.06.2021
(51) Int. Cl.: G01L 3/10, G01D 11/24

(54) **GEHÄUSE FÜR EIN ROTIERENDES BAUTEIL**
HOUSING FOR A ROTATING COMPONENT
BOÎTIER DESTINÉ À UN ÉLÉMENT ROTATIF

(30) Priorität: 29.06.2020 DE 102020116998; 29.06.2020 DE 102020116994; 17.11.2020 DE 102020130312
(43) Veröffentlichungstag der Anmeldung: 03.05.2023
(73) Patentinhaber: Voith Patent GmbH, 89522 Heidenheim (DE)
(72) Erfinder: VOGEL, Peter, 74564 Crailsheim (DE); WITTMANN, John, Patrick, 91088 Bubenreuth (DE); KRÜCKEL, Bert, 52499 Baesweiler (DE)
(74) Vertreter: Voith Patent GmbH - Patentabteilung
(86) Internationale Anmeldenummer: PCT/EP2021/067773
(87) Internationale Veröffentlichungsnummer: WO 2022/002892

(56) Entgegenhaltungen:
- EP-A1- 2 078 962
- EP-A1- 3 550 291
- DE-A1- 102018 127 022
- DE-A1- 19 857 770
- US-A1- 2004 255 694
- US-A1- 2014 002 066

## Beschreibung

Die Erfindung betrifft ein Gehäusesegment für die Bereitstellung eines Gehäuses für ein um eine Rotationsachse rotierenden Bauteils, wobei das Gehäusesegment für eine Abdeckung eines Teilbereiches in axialer Richtung der Rotationsachse und für eine Abdeckung eines Teilbereiches in Umfangsrichtung des rotierenden Bauteiles vorgesehen ist, sowie ein Gehäuse umfassend zumindest ein Gehäusesegment.

Aus der DE 198 57 770 ist eine Drehmomentmessvorrichtung an rotierenden Bauteilen, wie Wellen oder Zapfen, bekannt. Durch die bei einer Rotation wirkenden Kräfte ergeben sich infolge der elastischen Verformung des Bauteils Längenänderungen. Durch auf dem Bauteil befestigten Dehnungsmessstreifen wird mit Hilfe dieser eine proportionale Widerstandsänderung gemessen und berührungslos erfasst. Für eine berührungslose Einspeisung der Versorgungsenergie für die Dehnungsmessstreifen sowie für eine ebenfalls berührungslose Rückübertragung der Messwerte an eine Auswerteeinheit, ist eine Rotorelektronik vorgesehen. Die Rotorelektronik ist in einem die Dehnungsmessstreifen umgreifenden Kunststoffring angeordnet. Dabei sind die Dehnungsmessstreifen zu ihrem Schutz von einem formstabilen gegen das rotierende Bauteil beidseitig der Dehnungsmessstreifen abdichtenden Metallschutzring umgeben. Der Metallschutzring trägt seinerseits koaxial auf seinem Umfang den Kunststoffring, wobei die Rotorelektronik von dem der Kunststoffring aufgenommen ist. Nachteilig ist, dass dieser Schutzring eine zusätzliche Versteifung des Bauteils verursacht und damit die Messergebnissen verfälscht.

Aus der EP1 415 134 B1 ist eine Messvorrichtung zur Erfassung von Belastungen, insbesondere Drehmoment, Biegemoment und Axialkraft an rotierenden Bauteilen, wie Wellen, Spindeln oder Zapfen, bekannt. Mit der Messvorrichtung wird die sich unter Belastung ergebende Längenänderung mit Hilfe wenigstens eines auf dem Bauteil befestigten Dehnungsmessstreifens gemessen und berührungslos erfasst. Für eine berührungslose Einspeisung der Versorgungsenergie für den Dehnungsmessstreifen sowie für die ebenfalls berührungslose Übertragung der Messwerte an eine Auswerteeinheit ist eine Rotorelektronik vorgesehen. Die Rotorelektronik ist in einem oder mehreren, den Dehnungsmessstreifen umgreifenden Schutzring angeordnet ist.

Im Stand der Technik ist weiterhin die EP 2078962 A1 bekannt, die ein GehäuseSegment zur Aufnahme einer Elektronik, umfassend eine Kabeldurchführung zeigt. In dieser Anmeldung ist eine einfache Montage der Elektronik in dem Gehäusesegment vorteilhaft dargestellt.

Zur Verbesserung der Messgenauigkeit und der Aussagefähigkeit der Messergebnisse der Messvorrichtung sind der oder die Schutzringe einseitig abgestützt auf dem Bauteil angeordnet oder verformungsweich in Bezug auf das Bauteil ausgebildet. Der Schutzring ist mit beidseitig des Dehnmesstreifen angeordneten Dichtstegen ausgebildet. Dabei ist der Schutzring asymmetrisch ausgebildet, wobei auf der einen Seite der Dichtsteg einen Kraftschluss und damit eine sichere Verbindung zum Bauteil herstellt. Der Dichtsteg auf der anderen Seite weist eine schmale Auflagefläche auf und stützt sich damit gegen das Bauteil ab. Aufgrund der schmalen Auflagefläche kann aber so gut wie keine Belastung vom rotierenden Bauteil übertragen.

Zur Drehmomentmessung mittels Dehnmesstreifen (= DMS) an einer Gelenkwelle, z.B. in einem Stahlwalzwerk, gibt es zwei Systeme. Bei dem System 1 wird eine mit der Gelenkwelle rotierende Antenne verwendet. Ein feststehender Empfänger dient zur Übertragung des Signals. Dabei liefert das Signal am Ende der Signalverarbeitung einen Drehmomentmesswert. Bei dem System 2 wird eine stehende Ringantenne verwendet. Eine mit der Gelenkwelle rotierende Sender/Empfänger-Einheit sendet die Signale an die stehende Ringantenne. Produkte, welche solche Systeme zur Drehmomentmessung benutzen, sind z.B. drehmomentbegrenzende Kupplungen und hydrodynamische Kupplungen.

Nachteilig ist jedoch, dass es je nach Ringdurchmesser aufgrund des konventionellen Herstellungsverfahrens zu Spannungen innerhalb des Ringmaterials kommt, was dann beim Teilen des Ring während der Fertigung zu einem Weiten bzw. Zusammenziehen der Ringenden führen kann. Speziell bei großen geweiteten Ringhälften ist dann zur Montage des Ringes auf der Welle eine zweite Person zur Unterstützung erforderlich bis die zweite Ringhälfte aufgesetzt und die Schraubenverbindungen geschlossen sind. Hinzu kommt, dass durch eine innenliegende Elektroniktasche das Volumen des Ringes mitbestimmt und auch für eine Reparatur der Elektronik eine Demontage erforderlich ist. Durch das Gewicht des Ringes wird die wirkende Fliehkraft mit bestimmt. Auch hat sich das Gewicht als Nachteilig bei der Montage herausgestellt. Häufig werden die Ringhälften auch auf das rotierende Bauteil geklebt, wodurch das Bauteil nach einer Demontage nur bedingt wiederverwendbar ist, nachdem das Bauteil vom Kleber gereinigt wurde.

Der Erfindung liegt die Aufgabe zu Grunde ein verbessertes Gehäuse bereitzustellen. Dabei wurden die folgenden Aspekte insbesondere betrachtet:
Das Gehäuse erlaubt eine vereinfachte Montage.

Weiterhin liegt der Erfindung die Aufgabe zu Grunde, ein Verfahren zur Herstellung/Bereitstellung eines Gehäuses zu vereinfachen.

Darüber hinaus lag der Erfindung die Aufgabe zu Grunde ein Gehäuse bereitzustellen, dass eine Wartung und Reparatur erleichtert bzw. den damit verbundenen Aufwand reduziert.

Die Aufgabe wird durch das Gehäuse nach Anspruch 1 gelöst. Weitere vorteilhafte Merkmale sind in den abhängigen Ansprüchen genannt.

Erfindungsgemäß beinhaltet das Gehäuse ein Gehäusesegment wobei das Gehäusesegment aus einem Kunststoff gefertigt ist, eine Elektronikhausung für ein Elektronikmodul umfasst, eine radial außerhalb der Elektronikhausung angeordneten mit der Elektronikhausung über einen Durchbruch in Verbindung stehenden Hohlraum zur Aufnahme einer Antenne aufweist.

Vorteilhaft ist ein Gehäusesegment aus Kunststoff, da dies ein geringeres Gewicht im Vergleich zu den im Stand der Technik verwendeten Metallwerkstoffen aufweist. So können Fliehkräfte und Vibrationen reduziert werden. Ein kompakter Aufbau ermöglicht zudem eine kostengünstige Fertigung und vereinfachte Montage. Zudem kann mit einem Kunststoffgehäuse die Antenne vor Umwelteinflüssen geschützt werden, ohne dabei durch eine Abschirmung aus dem Gehäuse in ihrer Funktion gemindert zu werden. Eine Verbindung zwischen der Antenne und der in der Elektronikhausung befindlichen Elektronik ist für ein Verbindungskabel vorzusehen, mit der Elektronik und Antenne verbunden werden können. Kunststoff im Sinne dieser Erfindung sind Kohlenstoff enthaltende Polymere, die zumindest im Bereich des Hohlraums zur Aufnahme der Antenne weitgehend frei von Metallen oder anderen elektromagnetische Wellen abschirmenden Materialien sind.

Weiterhin vorteilhaft zeichnet sich das Gehäuse dadurch aus, dass das Gehäuse aus miteinander verbundenen Gehäusesegmenten zusammengesetzt ist. Es weist mindestens ein Gehäusesegment eine Hausung für eine Elektronik, insbesondere für die Aufnahme eines vorfertigbaren Elektronikmoduls auf. Dieses mindestens eine Gehäusesegment kann mittels 3D-Druck, auch als additive Fertigung bezeichnet, hergestellt sein. Additive Fertigung wird auch häufig durch AM abgekürzt. Durch die additive Fertigung kann eine individuelle Anpassung an eine Oberflächenkontur der äußeren Oberfläche eines rotierenden Bauteiles vorgesehen werden. Insbesondere ist es möglich das Gehäusesegment an die Außenkontur des Umfanges des rotierenden Bauteiles anzupassen. Durch 3D-Druck ist es möglich das Gehäusesegment dezentral zu fertigen, wodurch die Bereitstellung vereinfacht und auch beschleunigt werden kann. Insbesondere hat sich eine Herstellung aus einem Kunststoff, wie zum Beispiel PA12 oder PA6 als kostengünstige Materialien als vorteilhaft herausgestellt. Derartige Kunststoffmaterialien sind als Standartdruckmaterialien für den 3D-Druck bereits heute verfügbar. Für die Herstellung im 3D-Druck können bei geringen Stückzahlen die erforderliche Vorlaufzeit gering gehalten werden. So sind z.B. keine Gussformen oder eine NC-Programmierung vor Ort erforderlich. Auch können weite Transportwege vermieden werden.

In einer bevorzugten Ausführungsform ist vorgesehen, dass die Gehäusesegmente zur Bildung eines umlaufenden Gehäuses miteinander verbunden werden können. Vorzugsweise umgibt das Gehäuse das rotierende Bauteil koaxial zur Rotationsachse. Durch einen vorgelagerten Montageschritt eines Verbindens der Gehäusesegmente mit anderen Gehäusesegmenten kann eine Montage vor Ort verkürzt werden.

Erfindungsgemäß ist vorgesehen, die Gehäusesegmente formschlüssig miteinander zu verbinden. Das kann beispielsweise durch eine Rastverbindung geschehen. Solche Rastverbindungen können kostengünstig vorgesehen werden. Dabei hat es sich als vorteilhaft herausgestellt, eine Verbindung mit Spiel vorzusehen. Dadurch kann eine Fertigungstoleranz oder Abweichungen von vorbestimmten bzw. vorgegebenen Sollmaßen ausgeglichen werden. Eine Montage wird besonders einfach. So kann erreicht werden, dass eine Montage auch durch einen Mitarbeiter alleine möglich wird.

Es hat sich als vorteilhaft herausgestellt, dass das Gehäuse kraftschlüssig, vorzugsweise mittels einer Spannvorrichtung, mit dem rotierenden Bauteil verbindbar ist. Durch den Kraftschluss kann ein festes Aufliegen des Gehäuses erreicht werden, wobei durch ein Lösen des Kraftschlusses auch wieder ein Lösen des Gehäuses möglich ist. Somit kann ggf. auf ein Verkleben verzichtet werden. Das ist insbesondere bei einer Demontage vorteilhaft, da ein Entfernen von Klebstoff häufig schwierig ist. Durch eine einfache Möglichkeit einer Demontage wird zum einen eine Reparatur der von dem Gehäuse geschützten Bauteile erleichtert, auch können einfacher einzelne Segmente des Gehäuses selbst ausgetauscht werden. Das ist insbesondere vereinfacht möglich, wenn auch die Verrastung der Segmente miteinander lösbar ausgestaltet ist.

In einer bevorzugten Ausführungsform ist vorgesehen, bei der Verrastung ein Spiel in Umfangsrichtung vorzusehen. Das wirkt sich vorteilhaft auf die Montage aus, da zunächst eine Vormontage vorgenommen werden kann und das Gehäuse als ringförmiges Gehäuse das rotierende Bauteil umgibt. Eine besonders einfache Konstruktion sieht mindestens ein in Umfangsrichtung ausgebildetes Langloch vor. Dadurch kann bei Verrastung in das Langloch in Umfangsrichtung ein Spiel bereitgestellt werden.

Es hat sich als vorteilhaft herausgestellt, dass mindestens ein Gehäusesegment mit einer Elektronikhausung in Form eines ausgebildeten Hohlraumes versehen ist. Dieser Hohlraum kann dazu verwendet werden eine Elektronik aufzunehmen. Es kann auch vorgesehen sein, die Elektronik als ein vormontiertes Elektronikmodul aufzunehmen. In einer bevorzugten Ausführungsform ist vorgesehen, dass diese Elektronikhausung von der Gehäuseaußenseite, also aus axialer Richtung ohne Entfernen von Gehäusesegmenten zugänglich ist. Es hat sich als vorteilhaft herausgestellt einen Mittensteg vorzusehen, der in radialer Richtung vorsteht und der aus axialer Richtung zugänglich ist, so dass bei Ausbildung der Elektronikhausung in diesem Mittensteg die leichte Zugänglichkeit der Elektronikhausung gewährleistet ist. Es kann vorkommen, dass die Elektronik ausgetauscht werden muss oder ein Austausch von Bestandteilen einer Elektronik erforderlich wird. Es kann insbesondere erforderlich sein, dass regelmäßig eine Wartung durchgeführt werden muss. Gerade dann ist es von großem Vorteil, wenn die Hausung leicht zugänglich ist. So kann beispielsweise die Hausung nur durch einen entfernbaren und wieder montierbaren Deckel verschlossen sein. Alternativ kann das Elektronikmodul die Funktion des Deckels bereits beinhalten.

In einer bevorzugten Ausführungsform ist es vorgesehen, dass das Gehäuse durch als Gleichteile hergestellten Gehäusesegmenten gebildet wird. Dadurch wird die Teilevielfalt reduziert, was vorteilhaft ist. So kann dann nur bei dem Gehäusesegment eine herausbrechbare Seitenwandung herausgebrochen, bei dem die Elektronikhausung benötigt wird. In den weiteren Gehäusesegmenten können die herausbrechbaren Seitenwandungen verbleiben und dadurch eine Geräuscherzeugung im Betrieb und auch Schmutzansammlungen in den vorgehaltenen Elektronikhausungen vermieden werden.

In einer bevorzugten Ausführungsform ist vorgesehen, dass zumindest ein Gehäusesegment mit einer Elektronikhausung in 3D-Druck hergestellt ist. Für weitere verwendete Gehäusesegmente können Basissegmente ohne Elektronikhausung vorgesehen sein. Die Basissegmente haben vorzugsweise eine kürzere Erstreckung in Umfangsrichtung und können auch als Massenbauteil in einem anderen Fertigungsverfahren hergestellt sein. Eine Anpassung an den Einsatzort kann durch das mindestens eine Gehäusesegment vorgenommen werden. Damit kann die Anzahl an individuellen Bauteilen reduziert werden. Auch kann die Produktionszeit reduziert werden, da nur das Gehäusesegment in 3D-Druck produziert wird. Beim 3D-Druck ist derzeit die Produktionsgeschwindigkeit noch sehr begrenzt. Weiterhin kann ein Kostenvorteil erreicht werden, wenn ein Massenfertigungsverfahren für die Basissegmente eingesetzt wird und so durch hohe Stückzahlen ein pro Stück günstigeres Herstellungsverfahren, wie zum Beispiel Spritzguss, verwendet wird.

Es hat sich als vorteilhaft herausgestellt, dass für eine kraftschlüssige Verbindung von Gehäuse und rotierendem Bauteil eine Spannvorrichtung vorgesehen ist, wobei die Spannvorrichtung mindestens ein Spannband, vorzugsweise zwei Spannbänder, aufweist. Durch zwei Spannbänder lässt sich für den schmalen Steg und für den breiten Steg die kraftschlüssige Verbindung getrennt voneinander dosieren. Derartige Spannbänder sind als Standartbauteile erhältlich und damit kostengünstig. Auch lassen sich Spannbänder leicht montieren und auch demontieren. Jedes Spannband kann in einer umlaufenden Nut aufgenommen sein, so dass ein Verrutschen in axialer Richtung verhindert ist. Darüber hinaus trägt die Nut auch zu einer leichten Montage bei. Durch die Verwendung des Spannbandes kann eine gleichmäßige Druckverteilung auf dem ringförmigen Gehäuse und somit auf dem Gehäusesegment erreicht werden. Spitzenspannungen in einzelnen Bereichen können dadurch vermieden. Hieraus ergeben sich geringere Anforderungen hinsichtlich Festigkeit an den verwendeten Polymerwerkstoff.

In einer bevorzugten Ausführungsform ist vorgesehen, dass das Gehäuse auf seiner Gehäuseinnenseite mit einer Abschirmung versehen ist. Die Abschirmung kann durch über den Umfang verteilte Halteelemente gehalten werden. Es hat sich insbesondere als vorteilhaft herausgestellt, dass die Abschirmung hereinschiebbar ist. Durch die Abschirmung wird erreicht dass die vom ortsfesten Empfänger ausgehenden Magnetfeldlinien vorteilhaft um die Antenne geführt werden. Dadurch werden die Magnetfeldverluste hervorgerufen durch die Welle reduziert.

In einer bevorzugten Ausführungsform ist vorgesehen, dass das Gehäusesegment eine Aufnahme, vorzugsweise in Umfangsrichtung fortlaufend, für eine Antenne radial außen aufweist. Vorzugsweise ist als Aufnahme eine Nut vorgesehen, die auf dem äußersten Radius des Mittelsteges ausgebildet ist. Dadurch kann zum einen die Verbindung zu der Antenne und auch die Verbindung zu den in dem Gehäuse angeordneten Sensoren kurz gehalten werden.

Es hat sich als vorteilhaft herausgestellt, dass der radiale Abstand zwischen Welle und Antenne im Bereich von 40 mm und 80 mm liegt, vorzugsweise größer als 60 mm ist.

In einer bevorzugten Ausführungsform ist vorgesehen, dass das Gehäusesegment einen schmalen Steg und einen breiten Steg aufweist. Die Stege sind für einen seitlichen Abschluss des Gehäuses vorgesehen. Der breite Steg weist dabei eine größere axiale Erstreckung und damit Kontaktfläche zum rotierenden Bauteil auf als der schmale Steg. Dabei ist der breite Steg mit Hohlräumen für eine Leichtbaustruktur, vorzugsweise mit Wabenstruktur, ausgebildet. Durch die Leichtbaustruktur wird weiterhin eine hohe Belastbarkeit erreicht. Durch die Leichtbaustruktur ist es aber möglich sowohl das resultierende Gewicht als auch das erforderliche Material zu minimieren. Für den 3D-Druck ist es darüber hinaus vorteilhaft, eine gleichmäßige Materialverteilung zu haben. Große Sprünge von einer Schicht zur nächsten sind aufgrund von Spannungen und Verzug zu vermeiden.

In einer bevorzugten Ausführungsform ist vorgesehen die Elektronik als Elektronikmodul ausgebildet vorzumontieren. Das vormontierte Elektronikmodul kann so zügig montiert werden. Auch ist ein Austausch zügig möglich. Dadurch können Stillstandzeiten minimiert werden. Vorteilhaft ist dabei auch, wenn die Hausung leicht zugänglich ist. Auch ist eine Vorabkontrolle eines derartigen Elektronikmoduls durch den Hersteller möglich, so dass auch mögliche Fehler und eine Fehlfunktion minimiert werden.

Bei geeigneter Werkstoffauswahl (z.B. metallpartikel-gefüllter Kunststoff) kann eine elektromagnetische Abschirmung direkt im Gehäuse vorgesehen werden. Dadurch kann bereits im Herstellprozess die Abschirmung integriert werden. Durch eine geeignete Geometrie an der innenliegende Ringseite kann ein ggf. erforderliches Abschirmband werkzeuglos montiert und fixiert werden. Auf eine konventionelle Klebeverbindung kann dadurch verzichtet werden.

Weiterhin vorteilhaft ist ein Gehäuse wobei zwischen der Aufnahme für die Antenne und der Oberfläche des rotierenden Bauteils eine Abschirmung gegen elektromagnetische Strahlung angeordnet ist, geeignet den innenliegenden Hohlraum und/oder die Elektronikhausung gegen elektromagnetische Wellen abzuschirmen.

Die Abschirmung kann dabei beispielsweis aus einem Metallischen Netz, einem elektrisch leitenden Blech oder aus einem anderen elektromagnetische Wellen abschirmenden Gewebe ausgeführt sein. Zudem kann die Abschirmung auch derart angeordnet sein, dass sie neben der Elektronik auch die auf der Welle befindliche Sensorik abschirmt.

Anhand von Ausführungsbeispielen werden weitere vorteilhafte Merkmale der Erfindung erläutert unter Bezugnahme auf die Zeichnungen.
- **Fig. 1**: Gelenkwelle als rotierendes Bauteil mit einem Antennenring und mit einem ortsfest angeordneten Empfänger.
- **Fig. 2**: Detail Gelenkwelle
- **Fig. 3**: Gehäuse mit 4 Segmenten
- **Fig. 4**: Vergrößerte Darstellung des Gehäusesegmentes gem. Fig. 3
- **Fig. 5**: Vergrößerte Darstellung des Anschlussbereiches des Gehäusesegmentes aus Fig. 3,
- **Fig.6**: Vergrößerte Darstellung des Gehäuseabschnittes mit Ausnehmung für die Elektronik
- **Fig.7**: geschlossene Ausnehmung für Elektronik
- **Fig.8**: feingliedriges Gehäuse mit Verbindungssegment
- **Fig.9**: Elektronikmodul
- **Fig.10**: Einstelllehre
- **Fig.11**: Distanzstück
- **Fig.12**: Gehäusesegment in Leichtbauausführung
- **Fig.13**: Schnittdarstellung durch das Gehäusesegment aus Figur 12 entlang A-A
- **Fig.14**: Seitenansicht des Gehäusesegmentes gem. Fig. 12
- **Fig.15**: Schnittdarstellung entlang B-B gem. Fig. 14
- **Fig.16**: Prozess
- **Fig.17 a-c**: feingliedriges Gehäuse mittels Spannring verbunden

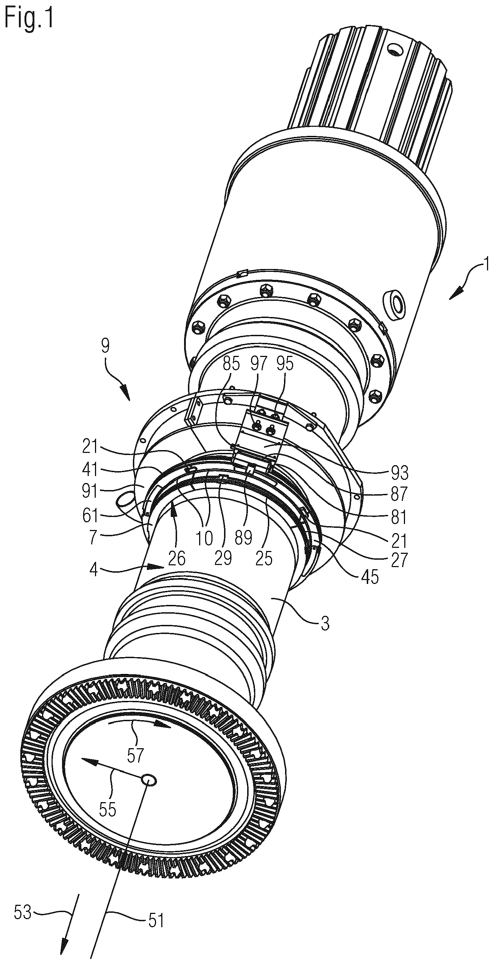

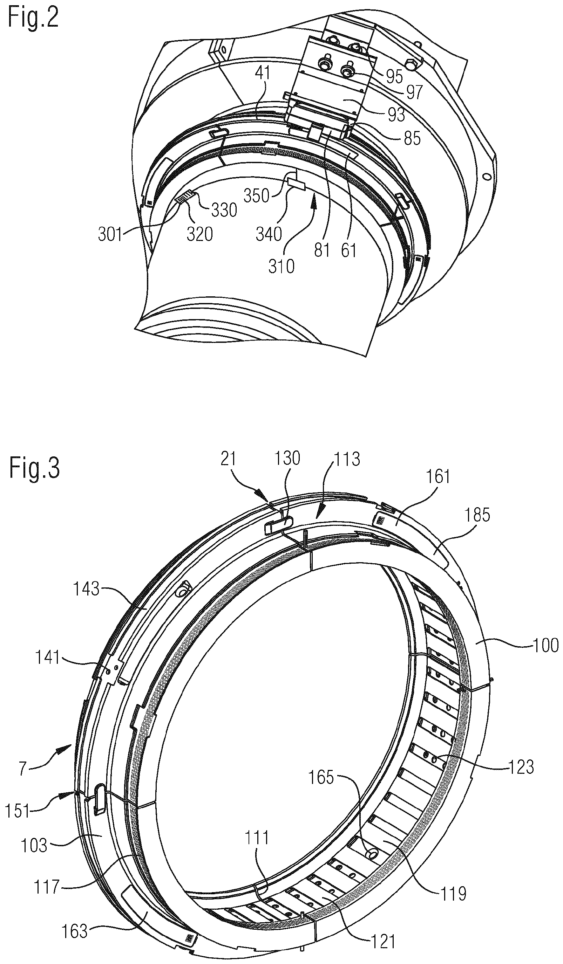

In Figur 1 ist Abschnitt einer Gelenkwelle 3 als ein Beispiel eines rotierenden Bauteiles 1 gezeigt. Die Gelenkwelle 3, im Folgenden auch als Welle bezeichnet, ist auf dem Außendurchmesser mit Sensoren 301, hier nicht gezeigt, versehen. Es sind zwei gegenüberliegende bzw. um 180° versetzen angebracht Sensoren vorgesehen. Der Sensor 301 rotiert mit der Welle 3 und ist durch das Gehäuse 7 verdeckt und geschützt. Eine Ausführung eines Sensors 301 ist in Figur 2 gezeigt und wird nachfolgend detailliert beschrieben. Die Welle 3 rotiert um die Drehachse 51. Die axiale Richtung der Welle ist mit 53 gekennzeichnet. Die radiale Richtung ist mit 55 bezeichnet und die Umfangsrichtung wird mit 57 gekennzeichnet.

Die Welle 3 ist von einem Gehäuse 7 koaxial umgeben. Das Gehäuse 7 liegt an der Außenfläche 4 der Welle 3 an. Das Gehäuse 7 weist bei der gezeigten Ausführung vier Gehäusesegmente 10 auf. Die Gehäusesegmente 10 sind jeweils durch eine formschlüssige Verbindung 21 mit benachbarten Gehäusesegmenten 10 jeweils verbunden. Zur Bereitstellung einer kraftschlüssigen Verbindung 26 mit der Welle 3 ist eine Spannvorrichtung 25 vorgesehen. Diese Spannvorrichtung 25 umfasst hier zwei Spannbänder 27 mit Verschluss 29. Die Spannbänder 27 sind beidseitig zu einem Mittensteg 45 angeordnet und die Stärke des Kraftschlusses der Verbindung zur Welle 3 ist jeweils mittels des Spannverschlusses 29 einstellbar. Der Mittensteg 45 ragt in radialer Richtung 55 über die Bereiche mit den Spannbändern 27 hinaus. In dem Mittensteg eines jeden Gehäusesegmentes 10 sind Hausungen 61 für ein Elektronikmodul ausgebildet. Die Gehäusesegmente 10 sind Gleichteile, wobei nur eine der Hausungen 61 für die Aufnahme eines Elektronikmoduls 171 benötigt wird. Das Elektronikmodul kann eine vormontierte und gekapselte Elektronik sein.

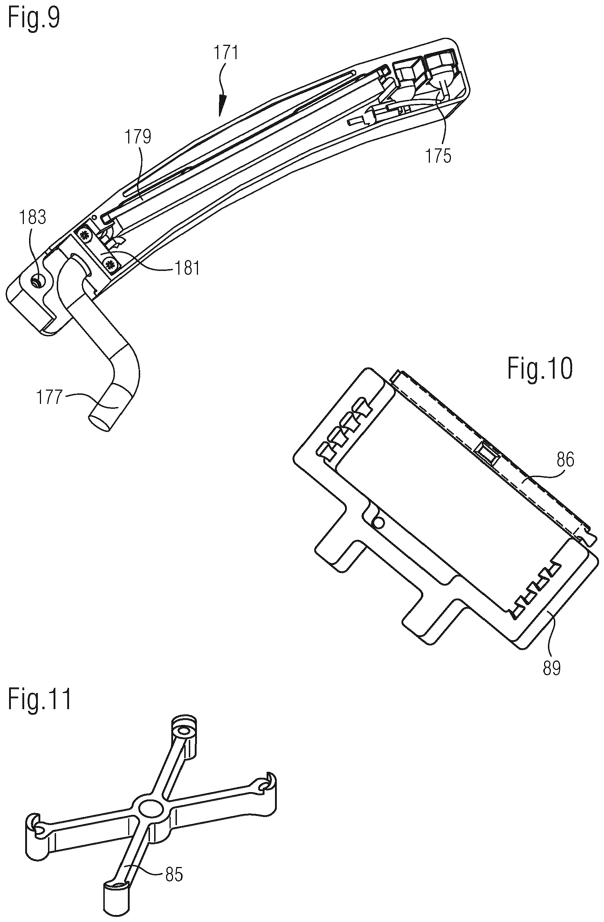

Auf dem radialen Außenumfang des Mittenstegs 45 ist eine Antenne 41 angeordnet. Durch die Antenne 41 ist ein Senden und Empfangen möglich. Über das Sendesignal wird die Energieversorgung bereitgestellt und es werden parallel Messsignale empfangen. Der Antenne 41 ist ein ortsfest angeordnete Sende-/Empfangseinheit 81 zugeordnet. Die Sende-/Empfangseinheit, auch als ortsfester Empfänger bezeichnet, ist an einem Teil des ortsfesten Lagergehäuses 91 durch eine Justierhalterung 93 gehaltert. Die Justierhalterung weist eine radiale Justierverbindung 97 und eine axiale Justierverbindung 95 auf. Die Justierverbindungen 95, 97 umfassen Langlöcher und Schrauben, so dass die Position der Justierhalterung 93 in radialer Richtung 55 und axialer Richtung 53 einstellbar ist. Der ortsfeste Empfänger 81 ist mit der ortsfesten Justierhalterung 93, hier über ein Distanzstück 85, fest verbunden. Durch das Distanzstück 85 wird eine bessere Belüftung der ortsfesten Sendeeinheit 81 durch einen ausgebildeten Lüftungsschlitz 87 ermöglicht. Darüber hinaus wird durch das aus Kunststoff gefertigte Distanzstück 85 und den definierten Abstand zur Justierhalterung 93 die Verluste der induktiven Energieübertragung gering gehalten. Durch die ortsfeste Sendeeinheit 81 ist es zum einen möglich Signale und Daten von der rotierenden Antenne 41 zu empfangen und zum anderen ist es auch möglich Energie zu der rotierenden Antenne 41 und damit auch zum Elektronikmodul 171 zu übertragen. Zur Justierung des Abstandes von Antenne zur ortsfesten Empfangseinheit 81 kann eine Einstelllehre 89, wie in Figur 10 detailliert gezeigt, verwendet werden. Die Justierung nach der Montage des Gehäuses 7.

Durch Dehnungsmessstreifen mit zugeordneter Elektronik und einer Sende- und Empfangseinheit ist eine Drehmomentmessvorrichtung 9 bereitgestellt. Das Gehäuse 7 kann aber auch für den Schutz von anderen auf einem rotierenden Bauteil angeordneten Bestandteilen verwendet werden. Insbesondere können auch andere Sensoren in dem Gehäuse aufgenommen sein.

In Figur 2 ist ein detaillierter Ausschnitt von Figur 1 darrgestellt. Innerhalb des Gehäuses 7 sind Sensoren 301 angeordnet. Die gezeigte Drehmomentsensorik 310 umfasst hier zwei Messpunkte, die hier in einem Winkel von 180° angeordnet sind. Durch die 180° auf dem Umfang versetzte Anordnung der Dehnungsmesstreifen wird der Einfluss von eventuell auftretenden Biegekräften auf das Drehmomentsignal minimiert. Jeder Messpunkt umfasst ein erstes Dehnmessstreifenpaket 320 und ein zweites Dehnmessstreifenpaket 330. Die beiden Messpunkte sind jeweils mit einem Stützpunkt 340 verbunden. Durch das erste und das zweite Dehnmessstreifenpaket der beiden Messpunkte kann z.B. eine Torsion bzw. andere auf die Welle 3 oder eines rotierenden Bauteils wirkende Kräfte detektiert werden. Der Stützpunkt 340 ist elektrisch über eine Leitung 350 mit einem hier nicht weiter dargestellten in der Hausung 61 aufgenommenen Elektronikmodul 171 verbunden. Über die Antenne 41 können die Signale zu einer ortsfesten Sende-/Empfangseinheit 81 übertragen werden. Die Sende-/Empfangseinheit ist mit der Justierhalterung 93 fest verbunden, wobei die Justierhalterung 93 die Möglichkeit einer Justierung in axialer 53 und radialer Richtung 55 bietet. In der gezeigten Darstellung sind die Sensoren zwar vor dem Gehäuse skizziert, aber in Realität sind die Sensoren 301 zwischen den Stegen 105, 107 und zwischen der Decke der Gehäuseinnenseite 112 und der Oberfläche des rotierenden Bauteiles angeordnet.

In Figur 3 ist das Gehäuse aus Figur 1 im Detail dargestellt. Das Gehäuse 7 besteht aus vier Gehäusesegmenten 100. Es könnte auch eine abweichende Anzahl an Gehäusesegment 100 vorgesehen sein. Diese Gehäusesegmente 100 sind in einem 3D-Druckverfahren als Kunststoffsegmente 103 hergestellt worden. Dadurch ist es möglich die Gehäusesegmente 100 und insbesondere deren Krümmungsradius in Umfangsrichtung 57 an den Durchmesser des vorgesehenen Montageortes individuell anzupassen. Die Gehäusesegmente 100, sind als Gleichteile ausgebildet. In jedem Gehäusesegment 100 ist eine Hausung 161 für ein Elektronikmodul 171, wie in Figur 9 dargestellt, ausgebildet. Die Hausungen 161 sind anfänglich durch herausbrechbare Seitenwandungen 163 verschlossen. Wären die Hausungen 161 offen würden im Betrieb Geräusche durch die Öffnungen erzeugt werden und auch Schmutz würde sich innerhalb der nicht genutzten Hausungen und Öffnungen ansammeln. Die Seitenwandungen 163 der Hausung 161 können durch z.B. einem Schraubendreher leicht herausgebrochen werden. Zum Verschließen der Hausung 161 ist ein Verschlussdeckel 185 eingesetzt. Durch diesen Verschlussdeckel kann die Hausung 161 wiederverschließbar verschlossen werden. Ist mal die Elektronik bzw. das Elektronikmodul 171 defekt, so kann zum Austausch der Verschlussdeckel 185 entfernt werden und nach Austausch des Elektronikmoduls 171 oder der defekten Bauteile kann die Hausung 161 wieder verschlossen werden. Die Hausung 161 ist aus axialer Richtung 53 zugänglich, eine Demontage des Gehäuses 7 oder einzelner Gehäusesegmente 100 ist nicht erforderlich.

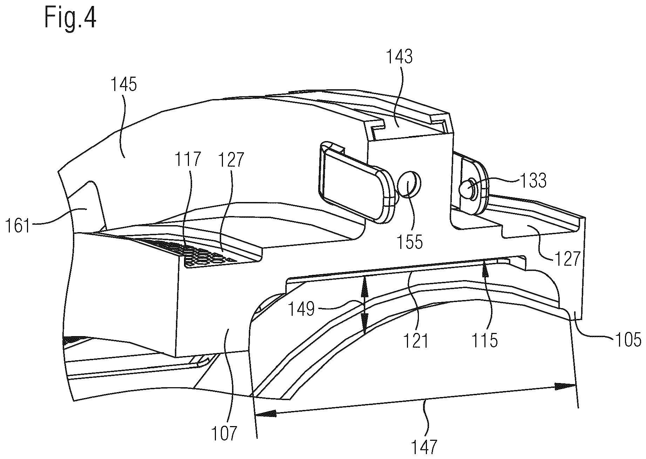

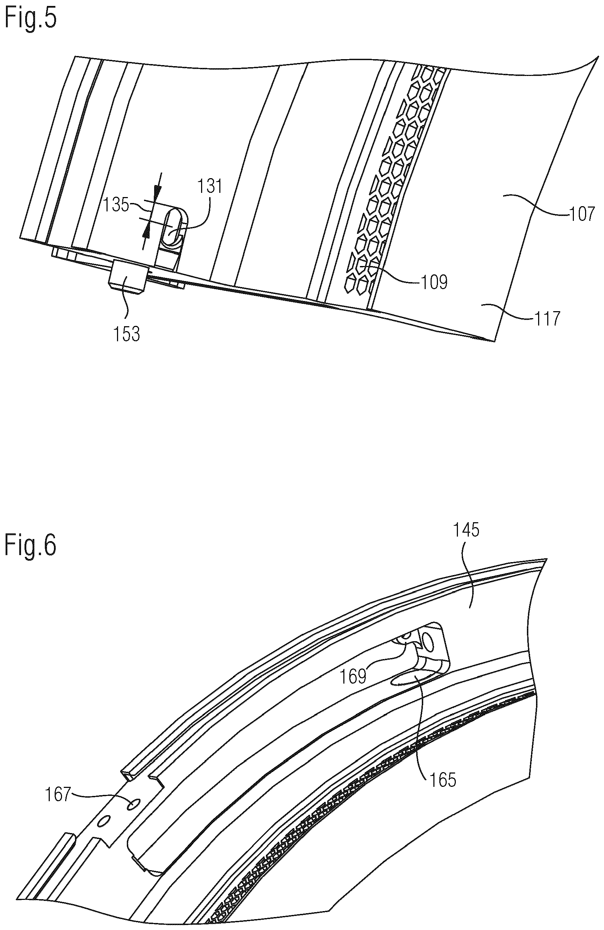

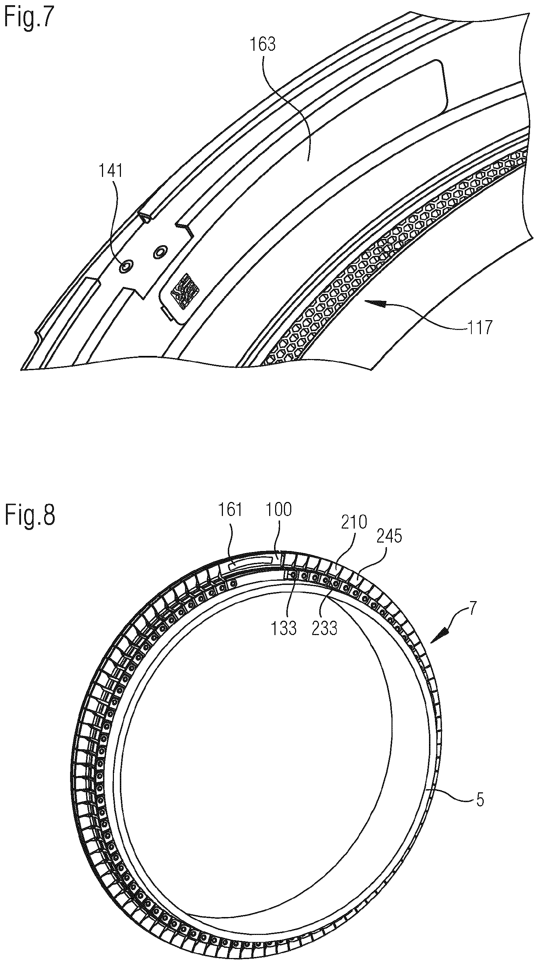

Die Gehäusesegmente 100 sind durch formschlüssige Verbindungen 21 mit den jeweils angrenzenden Gehäusesegmenten 100 zur Bildung eines umlaufenden Gehäuses 7 miteinander verbunden. Durch diesen Verbindungsmechanismus mit der Rastverbindung 130 zwischen den Gehäusesegmenten ist eine Vorfixierung während der Montage bereitgestellt. Damit ist eine Montage durch einen Mitarbeiter ohne zusätzliche Hilfsmittel möglich. Im Folgenden, Fig. 4, wird die vorgesehene Rastverbindung beschrieben. Es ist an einem in Umfangsrichtung 57 vorgesehenen Ende des Gehäusesegmentes 100 Rastnasen 133 ausgebildet. Diese Rastnasen 133 sind beidseitig von dem Segment des Mittensteges 145 angeordnet. Diesen Rastnasen 133 greifen jeweils in ein Langloch 131 des angrenzenden Gehäusesegmentes 100 ein. Durch das Langloch 131, Fig. 5, wird eine Verbindung mit Spiel 135 ermöglicht. Somit weist das Gehäusesegment an dem einen Ende in Umfangrichtung Rastnasen und an dem anderen Ende den Rastnasen 133 zugeordnete Langlöcher 131 auf. Durch das Spiel wird die Montage erleichtert und es können auch geringfügige Abweichungen des Umfanges des rotierenden Bauteils 1 ausgeglichen werden. Zur weiteren Montageerleichterung ist eine Zentrierung 151 mit einem Zentrierbolzen 153, Fig. 5, und einer Zentrierausnehmung 155, Fig. 4, vorgesehen. In der gezeigten Ausführung sind pro Verbindungsstelle zwei Rastverbindungen und eine Zentrierung vorgesehen, es könnten aber auch mehrere Zentrierungen und nur eine Rastverbindung 130 oder mehrere Rastverbindungen vorgesehen sein. Die Zentrierung 151 und die Rastverbindung 130 tragen zur Erleichterung und zur Stabilität der Verbindung der Gehäusesegmente bei. Im montierten Zustand umschließt das Gehäuse 7 die Rotationsachse 51. Zur festen Verbindung mit dem rotierenden Bauteil ist eine kraftschlüssige Verbindung 26 vorgesehen. Dafür weist das Gehäusesegment 100 beidseitig des Mittensteges 145 eine Nut für die Aufnahme eines Spannbandes, nicht dargestellt auf. Durch die Nut 127 ist ein Verrutschen des Spannbandes in axialer Richtung verhindert. Darüber hinaus ist auf dem Mittensteg 145 eine Antennennut 143 zur Lagerung der Antenne 41 ausgebildet. Durch die Antennennut ist ein Verrutschen der Antenne in axialer Richtung verhindert. Die Gehäuseaußenseite 113 des Gehäusesegmentes 100 ist in der Antennennut 143 mit Antennenbefestigungen 141, siehe auch Figur 7, versehen. Die Antennenbefestigungen 141 sind mit Leitungsdurchführungen 167, Fig. 6 verbunden. Die Leitungsdurchführungen reichen von der Gehäuseaußenseite 113 des Gehäusesegmentes in die Hausung 161. Dadurch ist eine elektrische Verbindung von Elektronikmodul zur Antenne möglich. Von der Hausung 161 ausgehend ist ein Durchbruch 165 zu einer Gehäuseinnenseite 111 des Gehäusesegmentes 100 ausgebildet. Diese dient zur Aufnahme einer elektrischen Verbindung 177 zur Sensorik 310. Auf der Gehäuseinnenseite 111 sind weitere Öffnungen sichtbar. Bei diesen Öffnungen handelt es sich um Abführöffnungen 123 für überschüssiges, nicht verschmolzenes Material. In diesen Umfangsabschnitten sind die Gehäusesegmente mit Hohlräumen für eine Gewichtsreduzierung und die Reduzierung von erforderlichem Material ausgebildet. Das Gehäusesegment 100 ist mit einem breiten Steg 107 und mit einem schmalen Steg 105 als axialer Seitenwandung ausgebildet. Die Stege 105, 107 werden mit dem rotierendem Bauteil kraftschlüssig verbunden. Durch die unterschiedlich großen Kontaktflächen wird die Beanspruchung des Gehäusesegmentes reduziert, da aufgrund der unterschiedlichen Größe der ausgebildeten Kontaktfläche der Kraftschluss unterschiedlich stark ist. Der breite Steg 107 ist in Leichtbauweise 117 ausgebildet. Hier ist als Leichtbaustruktur 109 eine Wabenstruktur vorgesehen. Auf der Innenseite 111 des Gehäusesegmentes 100 sind Zungen 121 als Halteelement 119 für eine Abschirmung 115 ausgebildet. Wie in Figur 4 gut zu erkennen ist, sind die Zungen 121 endseitig leicht nach radial innen gekrümmt. Dadurch wird ein Einschieben einer Abschirmung 115 erleichtert, darüber hinaus wird die Stabilität der Zungen erhöht.

Das Volumen des Gehäuses erstreckt sich in axialer Richtung 53 zwischen den Stegen 105 und 107 und ist mit 147 gekennzeichnet. Die Höhe und damit die radiale Erstreckung des Gehäuseinnenvolumens sind mit 149 gekennzeichnet.

Anhand von Figur 8 wir das Elektronikmodul 171 näher beschrieben. Die Elektronik kann vor der Endmontage bereits als Elektronikmodul vormontiert sein. Bei einem Defekt kann auch ein Austausch des kompletten Elektronikmoduls 171 durchgeführt werden. Dafür wird dann eine elektrische Verbindung 177 zur Sensorik inklusive einer vorgesehenen Zugentlastung 181 gelöst. Antennenanschlüsse 175 sind zu lösen und eine Befestigung 183 des Elektronikmoduls 171 zu einem in der Hausung 161 ausgebildeten Befestigungselement 169 ist zu lösen, damit das Elektronikmodul in seiner Gesamtheit aus der Hausung 161 entnommen werden kann.

Das Elektronikmodul umfasst eine Platine 179, die Elektronikkomponenten trägt, wobei die Elektronikkomponenten mit der Platine vergossen sein können. Darüber hinaus kann vorgesehen sein, dass die Elektronik in der Hausung lösbar vergossen ist. Damit bleibt auch ein einzelner Austausch der Platine weiterhin möglich. Die Funktionalität der vorgefertigten Platine als auch des Elektronikmoduls 171 können vor Endmontage überprüft werden. Bei geeigneter Werkstoffauswahl (z.B. metallpartikel-gefüllter Kunststoff) kann eine elektromagnetische Abschirmung direkt im Gehäuse vorgesehen werden.

In Figur 11 ist ein Distanzstück 85 gezeigt, wobei das Distanzstück eine gute Belüftung der Sende-/Empfangseinheit 81 ermöglicht. In Figur 10 ist die anhand von Figur 1 schon genannte Einstelllehre 89 in Detail gezeigt. Damit können vorbestimmte Abstände zwischen Antenne und der Sende-/Empfangseinheit 81 eingestellt werden. Dafür kann eine Auflage 86 an gewünschter Position eingelegt werden.

Bei diesem anhand der Figuren 1 bis 7 dargestellten Ausführungsbeispiel eines segmentierten Gehäuses aus gleichen Bauteilen lassen sich unterschiedliche Ringdurchmesser auf einfache Art realisieren.

Es ist ein Fixieren des ringförmigen Gehäuses 7 mittels eines handelsüblichen Spannbandes 27 möglich. Hierdurch wird eine gleichmäßige Druckverteilung auf das Gehäuse 7 erreicht, Spitzenspannungen in einzelnen Bereichen werden vermieden. Hieraus ergeben sich geringere Anforderungen hinsichtlich Festigkeit an den verwendeten Polymerwerkstoff. So sind bei einem Einsatz als Gehäuse auf einer Gelenkwelle bei einer Drehzahl von 0 bis zu 3000 rpm und einem Durchmesser von 100 mm bis 2200 mm und einer Festigkeit bzw. Streckspannung in Bereich von 65 MPa bis 80 MPa ausreichend.

Die Fixierung, konkret die Spannvorrichtung 25, wird im Gegenzug ebenfalls weniger belastet, da das Gehäuse 7 mit den einzelnen Gehäusesegmenten 10 gewichtsoptimiert gestaltet ist.

Durch die Halteelemente 119 gehäuseinnenseitig kann ein Abschirmband werkzeuglos montiert und fixiert werden. Auf eine konventionelle Klebeverbindung kann dadurch verzichtet werden. Somit sind sowohl die Montage selbst und auch ein Austausch montagefreundlich.

Eine weitere Variante segmentierten Gehäuses ist in Figur 8 dargestellt. Hierbei werden viele Basissegmente 210, welche nicht an den jeweiligen Gelenkwellendurchmesser angepasst werden, zu einer Kette zusammengefügt. Hier ist wiederum eine Rastverbindung mit einer Federrastnase 133 gezeigt. Die Federrastnase greift in ein Langloch ein, so dass eine Formschlüssige Verbindung mit Spiel bereitgestellt ist. Es gibt nur noch Gehäusesegment 100 umfassend eine Hausung 161. Dieses Gehäusesegment 100 dient als eine Art als "Kettenschloss" oder Schließelement des Gehäuses 7. Vorteil hier ist die höhere Flexibilität gegenüber variierenden Gelenkwellendurchmessern, da das Basissegment 210 unabhängig vom Durchmesser ist. Es ist nur noch ein Gehäusesegment 100 auf den konkreten Einsatz individuell angepasst an z.B. den Durchmesser des Einsatzortes erforderlich. Dies erweitert die Einsatzmöglichkeiten speziell im Hinblick auf temporäre Messeinsätze, da diese Basissegmente 210 sehr kostengünstig gefertigt und bevorratet werden können. Die Basiselemente sind in Ihrer Außenkontur des Gehäusesegmentes 100 angepasst. In der gezeigten Ausführung weist auch das Basissegment einen Mittensteg 245 zur Aufnahme der Antenne 41 auf. Auch die Kontaktflächen zu dem rotierenden Bauteil sind können vergleichbar der Kontaktfläche des schmalen Steges 105 und des breiten Steges 107 ausgestaltet sein. Es ist aber auch möglich die beiden Seitenbegrenzungen des Basissegmentes 210 symmetrisch auszugestalten, da hier der Kontakt zum rotierenden Bauteil linienförmig ist und somit die auf das Basissegment 210 übertragenen Kräfte, insbesondere Torsionskräfte gering sind. Durch die Basissegmente 210 sind dann die als "Kettenschloss" eingesetzten Gehäusesegmente nur noch in geringer Stückzahl erforderlich. So können für vorbestimmte Standartdurchmesser diese dann auch in einer geringen Stückzahl vorzuhalten. Natürlich ist es auch möglich auch mehr als ein Gehäusesegment 100 zusammen mit Basissegmente 210 zur Bildung eines Gehäuses 7 einzusetzen. Bei der Darstellung in Figur 8 ist das Gehäuse 7 auf einer Hohlwelle 5 angeordnet dargestellt. Somit ist die Kontur der Gehäuseinnenseite in dieser Darstellung nicht ersichtlich.

Als weitere für den Anwendungsfall additive gefertigte Bauteile sind zu nennen:
- Einstellehre: Die Einstellehre dient zur einfachen Montage des feststehenden Empfängers im definierten Abstand zum Kupferband als Antenne 41 auf dem ringförmigen Gehäuse 7, Figur 2 und Figur 10. Die Lehre ist für den gewünschten Abstand einstellbar.
- Distanzstück 85, Figur 11: Das Distanzstück besteht aus Kunststoff, da es für den Empfänger für die Funktion vorteilhaft ist, wenn dieser nicht direkt auf der metallischen Justierhalterung 93 befestigt ist. Das Distanzstück 85 ist so gestaltet, dass die Wärme, welche beim Betrieb des Empfängers 81 entsteht, bestmöglich an die Umgebungsluft abgegeben werden kann. Außerdem wird der metallfreie Raum um den Empfänger erhöht.

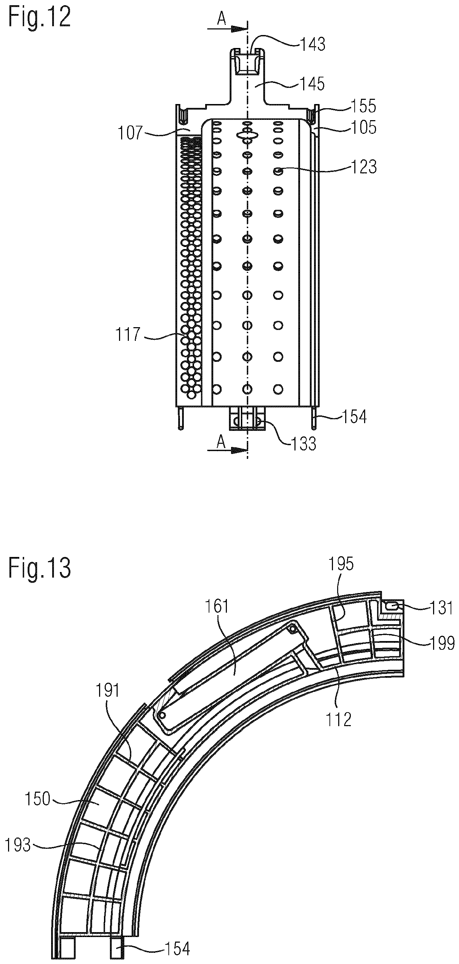

In den Figuren 12 bis 15 ist eine Ausführungsalternative des Gehäusesegmentes 100 in Leichtbauweise dargestellt. Eine derartige Leichtbauausführung des Gehäusesegmentes ist insbesondere auf eine Fertigung mittels additiven Verfahren abgestimmt. Im Vergleich zu der Ausführung gemäß 3 bis 7 weist das Gehäusesegment einen Mittelsteg auf, wobei dieser Mittensteg eine größere radiale Erstreckung aufweist. Dadurch ist es möglich, die Hausung 161 für das Elektronikmodul rechteckförmig auszubilden. Die Rechteckform hat den Vorteil, dass eine Abstimmung bzw. Anpassung an die Krümmung des Gehäusesegmentes 100 nicht erforderlich ist. Es sind für eine Zentrierung 151 sind im Bereich der Stege 107 und 107 jeweils Zentrierstege ausgebildet. Diese Zentrierstege 154 greifen in gegensinnig ausgebildete Zentrierausnehmungen 155 ein. Die Rastelemente 133 und die Langlöcher 131 sind radial unterhalb der Antennennut 143 vorgesehen. Dadurch ist die Rastverbindung mittels Langloch 131 und Rastnase 133 aufgrund der innenliegenden Anordnung vor Beschädigungen geschützt.

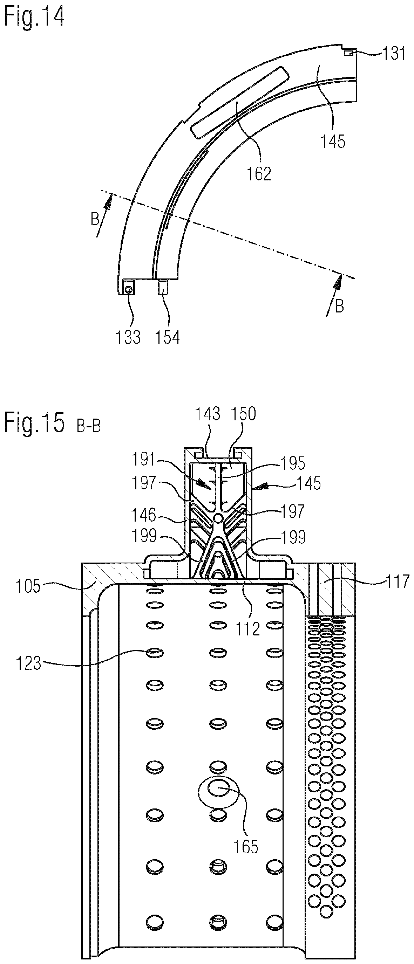

Aus Figur 13 und Figur 15 ist der innere Aufbau des Mittensteges 145 zu ersehen. In Figur 15 ist ein Schnitt durch das Gehäusesegment entlang B-B aus Figur 14 mit der angezeigten Blickrichtung dargestellt. Der Mittensteg weist seitliche Gehäusewandungen 146 auf. In Umfangsrichtung ist zwischen den Seitenwandungen 146 die Antennennut 143 ausgebildet. In dem Mittensteg ist ein Hohlraum 150 ausgebildet. Innerhalb des Hohlraumes 150 ist eine Stützstruktur 191 vorgesehen. Diese Stützstruktur weist Stützstreben 195 zum Boden der Antennennut auf. Es sind Stützstreben 197 zu den Seitenwänden 146 ausgebildet und des sind Stützstreben 199 zur Decke der Gehäuseinnenseite 112 ausgebildet. Diese Stützstreben sind durch in Umfangsrichtung ausgebildeten Stützstreben 193, Fig. 13 miteinander verbunden. In der Decke 112 der Gehäuseinnenseite sind Öffnungen 123 ausgebildet, durch die überschüssiges Material abgeführt werden kann.

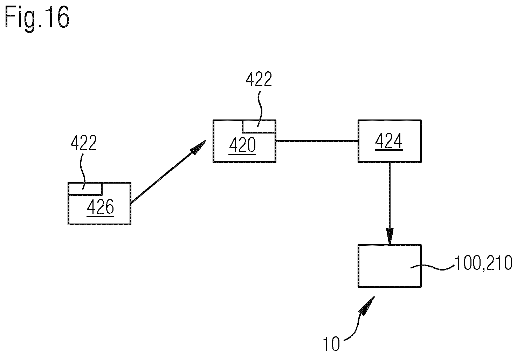

In Figur 16 ist die Fertigungskette für die Additive Fertigung, auch 3D-Druck genannt, dargestellt. Die das additiv zu fertigende Bauteil wiedergebenden Daten für den 3D-Druck können über einen Datenträger 426 der Steuereinheit zugeführt werden oder auch über eine Netzwerkverbindung der Steuereinheit zugeführt werden. Die Daten können in einem Rechenprogramm enthalten sein oder das Rechenprogramm zur Verarbeitung der Daten kann bereits in der Steuereinheit vorhanden sein. Durch die Steuereinheit wird der 3D-Drucker zur Herstellung des 3D-Druckbauteiles, wie insbesondere dem Gehäusesegment 100, angesteuert. Auch die Basissegmente 210 können in 3D-Druck hergestellt werden, was eine Vorortherstellung ermöglicht. Auch das Distanzstück 85 und die Einstelllehre können so in 3D-Fertigung hergestellt sein.

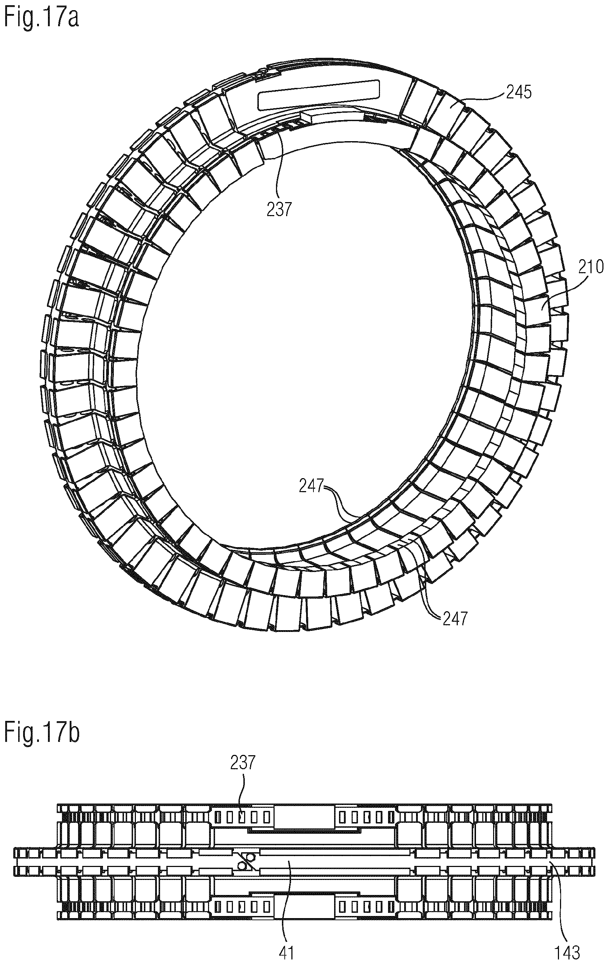

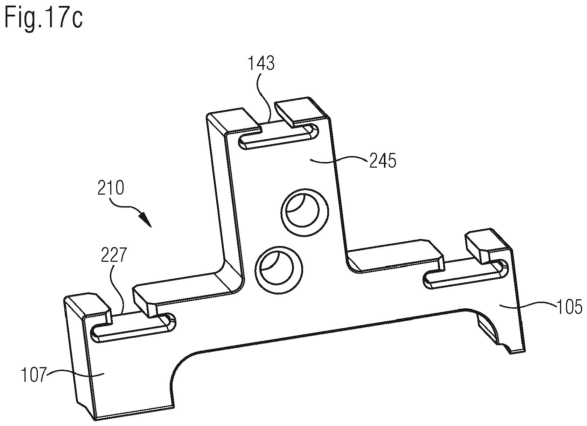

In den Figuren 17a bis 17c ist eine Ausführungsvariante mit Basissegmenten gezeigt. Im Vergleich zu der Ausführung gemäß Figur 8 sind die Basissegmente nicht mittels Rastnasen miteinander verbunden, sondern verfügen über radial teilgeschlossene Nuten 227 für die Aufnahme des Spannbandes 237. Bei dieser Ausführung ist ein Spannband mit Durchbüchen 237 verwendet worden. Derartige Spannbänder 237 lassen sich besonders gut spannen. Jedes Basissegment 210 weist an den Stegen 107 und 105 jeweils zwei zueinander gekippte Kontaktflächen 247 auf. Durch die gekippte Anordnung der Kontaktflächen 247 zueinander ist gewährleistet, dass sowohl der Seitensteg schmal 105 mit zwei Kontaktstellen und auch der Seitensteg breit 107 mit zwei Kontaktstellen auf dem rotierenden Bauteil 1 im verspannten Zustand aufliegt. Dabei verändern sich die Positionen der Kontaktstellen in Abhängigkeit von der Oberflächenkrümmung des rotierenden Bauteils 1. Für eine Vereinfachung der Montage sind die Basissegmente 210 mit zwei versetzten Löchern versehen. Die Basissegmente können auf Stäbe vormontiert werden und die die Spannbänder und die Antenne können in die dafür vorgesehene Nuten 227, 143 eingezogen werden. Diese Basissegmente 210 können sowohl im Spritzguss als auch in 3D-Druck als auch spannend hergestellt werden.

### Bezugszeichenliste

| | |
|---|---|
| 1 | Rotierendes Bauteil |
| 3 | Gelenkwelle, |
| 4 | Außenfläche Gelenkwelle |
| 5 | Hohlwelle |
| 7 | Gehäuse |
| 9 | Drehmomentmessvorrichtung |
| 10 | Gehäusesegment |
| 21 | Formschlüssige Verbindung |
| 25 | Spannvorrichtung |
| 26 | Kraftschlüssige Verbindung |
| 27 | Spannband |
| 29 | Verschluss Spannband |
| 41 | Antenne |
| 45 | Mittensteg |
| 51 | Drehachse |
| 53 | Axiale Richtung |
| 55 | Radiale Richtung |
| 57 | Umfangsrichtung |
| 61 | Elektronikhausung |
| 81 | ortsfester Empfänger, Sende-Empfangseinheit |
| 85 | Distanzstück |
| 86 | Auflage |
| 87 | Lüftungsschlitz |
| 89 | Einstelllehre - Abstand Antenne zu ortsfestem Empfänger |
| 91 | Teil des Ortsfesten Lagergehäuses |
| 93 | Justierhalterung |
| 95 | Axiale Justierverbindung |
| 97 | Radiale Justierverbindung |
| 100 | Gehäusesegment in Leichtbauweise |
| 103 | Kunststoffsegment |
| 105 | Seitensteg schmal |
| 107 | Seitensteg breit |
| 109 | Leichtbaustruktur |
| 111 | Gehäuseinnenseite |
| 112 | Decke Gehäuseinnenseite |
| 113 | Gehäuseaußenseite |
| 115 | Abschirmung |
| 117 | Seitensteg in Leichtbau (Wabenstruktur) |
| 119 | Halteelemente |
| 121 | Zungen |
| 123 | Öffnungen für überschüssiges Material |
| 127 | Nut Spannband |
| 130 | Rastverbindung |
| 131 | Langloch |
| 133 | Rastnase |
| 135 | Spiel |
| 141 | Antennenbefestigung |
| 143 | Antennennut |
| 145 | Segment Mittensteg |
| 146 | Seitenwand Mittensteg |
| 147 | Axiale Erstreckung des Gehäuseinnenraumes |
| 149 | Radiale Erstreckung des Gehäuseinnenraumes |
| 150 | Hohlraum Mittensteg |
| 151 | Zentrierung |
| 153 | Zentrierbolzen |
| 154 | Zentrierstege |
| 155 | Zentrierausnehmung |
| 161 | Hausung Elektronikmodul |
| 163 | Seitenwandung-herausbrechbar |
| 165 | Durchbruch zum Gehäuseinnenraum |
| 167 | El. Leitungsdurchführung Antennenanschluss |
| 169 | Befestigungselement in der Elektronikhausung |
| 171 | Elektronikmodul |
| 175 | Antennenanschlüsse |
| 177 | Verbindung zur Sensorik |
| 179 | Elektronikplatine |
| 181 | Zugentlastung |
| 183 | Befestigung Platine zum Gehäusesegment |
| 185 | Verschlussdeckel-wiederverschließbar |
| 191 | Stützstruktur Mittensteg |
| 193 | Stützstrebe in Umfangsrichtung |
| 195 | Stützstrebe Antennenboden |
| 197 | Stützstrebe Seitenwand |
| 199 | Stützstrebe Decke Gehäuseinnenseite |
| 210 | Basissegment |
| 233 | Federrastnase |
| 227 | radial teilgeschlossene Nut Spannband |
| 237 | Spannband mit Durchbrüchen |
| 245 | Mittensteg Basissegment |
| 247 | Kontaktflächen zueinander gekippt |
| | |
| 301 | Sensor |
| 310 | Drehmomentsensorik |
| 320 | Erstes Dehnmessstreifenpacket |
| 330 | Zweites Dehnmessstreifenpacket |
| 340 | Stützpunkt |
| 350 | El. Verbindung zum Elektronikmodul |
| 420 | Steuereinheit |
| 422 | Rechenprogramm |
| 424 | 3D-Drucker |
| 426 | Träger |

## Patentansprüche

1. Gehäuse (7) für einen Teilbereich eines um eine Rotationsachse (51) rotierenden Bauteiles (1), wobei das Gehäuse (7) die Rotationsachse (51) umschließt und wobei das Gehäuse (7) zumindest ein Gehäusesegment (10, 100, 210) aufweist, wobei das Gehäusesegment (10, 100, 210) für eine Abdeckung eines Teilbereiches in axialer Richtung (53) der Rotationsachse (51) und für eine Abdeckung eines Teilbereiches in Umfangsrichtung (57) des rotierenden Bauteiles (1, 5) vorgesehen ist, wobei das Gehäusesegment (10, 100, 210) aus einem Kunststoff gefertigt ist, eine Elektronikhausung (61, 161) für ein Elektronikmodul (171) umfasst, einen radial außerhalb der Elektronikhausung (61, 161) angeordneten mit der Elektronikhausung (61, 161) in über einen Durchbruch in Verbindung stehenden Hohlraum zur Aufnahme (143) einer Antenne (41) aufweist, Gehäusesegment (10, 100) mit weiteren Gehäusesegmenten (10, 100, 210) zur Bildung eines das rotierende Bauteil (1), vorzugsweise koaxial, umgebenden Gehäuse (7) verbindbar ist und mittels formschlüssigen Verbindungen (21, 130) zur Verbindung mit weiteren Gehäusesegmenten (10, 100, 210), vorzugsweise zur Verbindung mit Spiel (135), versehen ist, wobei der Hohlraum zur Aufnahme (143) einer Antenne (41) die Rotationsachse Ringförmig in Umfangsrichtung umschließt.

2. Gehäuse (7) nach Anspruch 1, **dadurch gekennzeichnet dass** das Gehäuse eine Antenne (41) umfasst, wobei die Antenne (41) als Ringantenne ausgeführt ist

3. Gehäuse (7) nach Anspruch 1 oder Anspruch 2, **dadurch gekennzeichnet dass** das Gehäusesegment (10, 100, 210) einen Mittensteg (145, 245) aufweist, wobei sich der Mittensteg (145, 245) in radialer Richtung erstreckt und eine geringere axiale Erstreckung als die maximale axiale Erstreckung des Gehäusesegmentes (100, 210) aufweist und wobei der Mittensteg (145) zumindest einen innenliegenden Hohlraum (150) aufweist.

4. Gehäuse (7) nach einem der vorherigen Ansprüche, **dadurch gekennzeichnet dass** in dem Hohlraum (150) des Mittensteges (145) eine Stützstruktur (191) für eine Erhöhung der Formstabilität des Mittensteges (145) angeordnet ist, wobei die Stützstruktur (191) in axialer Richtung (53), in Umfangsrichtung (57) und/oder in radialer Richtung (55) verlaufende Stege (193, 195, 197, 199) aufweisen kann.

5. Gehäuse (7) nach einem der vorherigen Ansprüche, **dadurch gekennzeichnet dass** das Gehäusesegment (100, 210) mindestens ein Langloch (131) zur Bereitstellung einer formschlüssigen Verbindung (21) mit Spiel (135) und mindestens ein Rastnase (133, 233) zur Verbindung mit einem weiteren Gehäusesegment (10, 100, 210) aufweist.

6. Gehäuse (7) nach einem der vorherigen Ansprüche, **dadurch gekennzeichnet dass** das Gehäusesegment (10, 100, 210) mit mindestens einem Halteelemente für die Aufnahme einer Abschirmung aufweist, wobei das mindestens eine Halteelemente über den innenliegenden Hohlraum (150) und/oder die Elektronikhausung (61, 161) zugänglich sind.

7. Gehäuse (7) nach einem der vorherigen Ansprüche, **dadurch gekennzeichnet dass** ein radialer Abstand zwischen radialer Oberfläche des rotierendem Bauteil und der Aufnahme (143) für die Antenne im Bereich von 40 mm und 80 mm liegt, vorzugsweise größer als 60 mm ist.

8. Gehäuse (7)nach einem der vorherigen Ansprüche, **dadurch gekennzeichnet dass** das Gehäusesegment (10, 100, 210) mittels einem additiven Verfahren, vorzugsweise im 3D Druck Verfahren hergestellt ist.

9. Gehäuse (7) nach einem der vorherigen Ansprüche, **dadurch gekennzeichnet, dass** das Teile des Gehäusesegmentes (10, 100, 210), des Mittensteg (145, 245) und/oder der Stützstruktur (191) Hohlräume zur Ausbildung eine Leichtbaustruktur (109) aufweisen, vorzugsweise mittels Wabenstruktur, geeignet eine Gewichtsreduzierung zu erreichen.

10. Gehäuse (7) nach nach einem der vorherigen Ansprüche, **dadurch gekennzeichnet dass** das Gehäuse (7) kraftschlüssig, vorzugsweise mittels einer Spannvorrichtung (25), mit dem rotierenden Bauteil (1) verbindbar ist.

11. Gehäuse (7) nach nach einem der vorherigen Ansprüche, **dadurch gekennzeichnet dass** zumindest ein Gehäusesegment (10, 100) mit der Elektronikhausung (161) für das Elektronikmodul (171) in einem Additiven Verfahren wie beispielsweise 3D-Druck hergestellt sind, wobei andere Gehäusesegmente als Basiselemente (210) mit einer kürzeren Erstreckung in Umfangsrichtung (57) in einem abweidenden Fertigungsverfahren, wie beispielsweise Spritzguss, hergestellt sein können.

12. Gehäuse (7) nach einem der vorherigen Ansprüche, **dadurch gekennzeichnet, dass** zwischen der Aufnahme (143) für die Antenne (41) und der Oberfläche des rotierenden Bauteils eine Abschirmung gegen elektromagnetische Strahlung angeordnet ist, geeignet den innenliegenden Hohlraum (150) und/oder die Elektronikhausung (61, 161) gegen elektromagnetische Wellen abzuschirmen.

## Claims

1. Housing (7) for a subregion of a component (1) which rotates about a rotation axis (51), wherein the housing (7) surrounds the rotation axis (51) and wherein the housing (7) has at least one housing segment (10, 100, 210), wherein the housing segment (10, 100, 210) is provided for covering a subregion in the axial direction (53) of the rotation axis (51) and for covering a subregion in the circumferential direction (57) of the rotating component (1, 5), wherein the housing segment (10, 100, 210) is manufactured from a plastic, comprises an electronics enclosure (61, 161) for an electronics module (171), has a cavity for receiving (143) an antenna (41), which cavity is arranged radially outside the electronics enclosure (61, 161) and is connected to the electronics enclosure (61, 161) in via an aperture, housing segment (10, 100) can be connected to further housing segments (10, 100, 210) for forming a housing (7) which, preferably coaxially, surrounds the rotating component (1), and is provided by means of interlocking connections (21, 130) for connection to further housing segments (10, 100, 210), preferably for connection having play (135), wherein the cavity for receiving (143) an antenna (41) surrounds the rotation axis in an annular manner in the circumferential direction.

2. Housing (7) according to Claim 1, **characterized in that** the housing comprises an antenna (41), wherein the antenna (41) is embodied as a ring antenna.

3. Housing (7) according to Claim 1 or Claim 2, **characterized in that** the housing segment (10, 100, 210) has a central web (145, 245), wherein the central web (145, 245) extends in the radial direction and has a smaller axial extent than the maximum axial extent of the housing segment (100, 210) and wherein the central web (145) has at least one internal cavity (150).

4. Housing (7) according to any of the preceding claims, **characterized in that** a supporting structure (191) for increasing the dimensional stability of the central web (145) is arranged in the cavity (150) in the central web (145), wherein the supporting structure (191) can have webs (193, 195, 197, 199) which run in the axial direction (53), in the circumferential direction (57) and/or in the radial direction (55).

5. Housing (7) according to any of the preceding claims, **characterized in that** the housing segment (100, 210) has at least one elongate hole (131) for providing an interlocking connection (21) having play (135) and at least one latching lug (133, 233) for connection to a further housing segment (10, 100, 210).

6. Housing (7) according to any of the preceding claims, **characterized in that** the housing segment (10, 100, 210) has with at least one holding elements for receiving a shielding, wherein the at least one holding elements are accessible via the internal cavity (150) and/or the electronics enclosure (61, 161).

7. Housing (7) according to any of the preceding claims, **characterized in that** a radial distance between the radial surface of the rotating component and the receptacle (143) for the antenna lies in the range of from 40 mm to 80 mm, preferably is greater than 60 mm.

8. Housing (7) according to any of the preceding claims, **characterized in that** the housing segment (10, 100, 210) is produced using an additive method, preferably using a 3D printing method.

9. Housing (7) according to any of the preceding claims, **characterized in that** the parts of the housing segment (10, 100, 210), of the central web (145, 245) and/or of the supporting structure (191) have cavities for forming a lightweight structure (109), preferably by means of a honeycomb structure, in a manner suitable for achieving a reduction in weight.

10. Housing (7) according to any of the preceding claims, **characterized in that** the housing (7) can be connected to the rotating component (1) in a forcefitting manner, preferably by means of a clamping apparatus (25).

11. Housing (7) according to any of the preceding claims, **characterized in that** at least one housing segment (10, 100) with the electronics enclosure (161) for the electronics module (171) are produced using an additive method, such as 3D printing for example, wherein other housing segments can be produced as base elements (210) with a shorter extent in the circumferential direction (57) in a different manufacturing method, such as injection moulding for example.

12. Housing (7) according to any of the preceding claims, **characterized in that** a shielding against electromagnetic radiation is arranged between the receptacle (143) for the antenna (41) and the surface of the rotating component, in a manner suitable for shielding the internal cavity (150) and/or the electronics enclosure (61, 161) against electromagnetic waves.

## Revendications

1. Boîtier (7) destiné à une zone partielle d'un composant (1) tournant autour d'un axe de rotation (51), dans lequel le boîtier (7) entoure l'axe de rotation (51), et dans lequel le boîtier (7) présente au moins un segment de boîtier (10, 100, 210), dans lequel le segment de boîtier (10, 100, 210) est prévu pour un recouvrement d'une zone partielle dans la direction axiale (53) de l'axe de rotation (51) et pour un recouvrement d'une zone partielle dans la direction circonférentielle (57) du composant rotatif (1, 5), dans lequel le segment de boîtier (10, 100, 210) est fabriqué en matière plastique, comprend un emplacement d'électronique (61, 161) destiné à un module électronique (171), présente une cavité disposée radialement à l'extérieur de l'emplacement d'électronique (61, 161), en communication avec l'emplacement d'électronique (61, 161) dans à travers un passage, et destinée au logement (143) d'une antenne (41), segment de boîtier (10, 100) peut être relié à d'autres segments de boîtier (10, 100, 210) pour former un boîtier (7) entourant, de préférence de manière coaxiale, le composant rotatif (1), et est muni au moyen de liaisons (21, 130) par complémentarité de forme pour être relié à d'autres segments de boîtier (10, 100, 210), de préférence pour une liaison avec jeu (135), dans lequel la cavité destinée au logement (143) d'une antenne (41) entoure l'axe de rotation de manière annulaire dans la direction circonférentielle.

2. Boîtier (7) selon la revendication 1, **caractérisé en ce que** le boîtier comprend une antenne (41), dans lequel l'antenne (41) est réalisée sous forme d'antenne circulaire.

3. Boîtier (7) selon la revendication 1 ou la revendication 2, **caractérisé en ce que** le segment de boîtier (10, 100, 210) présente une barrette centrale (145, 245), dans lequel la barrette centrale (145, 245) s'étend dans la direction radiale et présente une étendue axiale inférieure à l'étendue axiale maximale du segment de boîtier (100, 210), et dans lequel la barrette centrale (145) présente au moins une cavité interne (150).

4. Boîtier (7) selon l'une quelconque des revendications précédentes, **caractérisé en ce qu'**une structure de soutien (191) pour augmenter la stabilité dimensionnelle de la barrette centrale (145) est disposée dans la cavité (150) de la barrette centrale (145), dans lequel la structure de soutien (191) peut présenter des barrettes (193, 195, 197, 199) s'étendant dans la direction axiale (53), dans la direction circonférentielle (57) et/ou dans la direction radiale (55) .

5. Boîtier (7) selon l'une quelconque des revendications précédentes, **caractérisé en ce que** le segment de boîtier (100, 210) présente au moins un trou oblong (131) pour fournir une liaison par complémentarité de forme (21) avec du jeu (135) et au moins un bec d'arrêt (133, 233) pour une liaison avec un autre segment de boîtier (10, 100, 210).

6. Boîtier (7) selon l'une quelconque des revendications précédentes, **caractérisé en ce que** le segment de boîtier (10, 100, 210) présente avec au moins un éléments de retenue pour le logement d'un blindage, dans lequel l'au moins un éléments de retenue sont accessibles par l'intermédiaire de la cavité interne (150) et/ou de l'emplacement d'électronique (61, 161).

7. Boîtier (7) selon l'une quelconque des revendications précédentes, **caractérisé en ce qu'**une distance radiale entre la surface radiale du composant rotatif et le logement (143) pour l'antenne est comprise dans la plage de 40 mm et 80 mm, étant de préférence supérieure à 60 mm.

8. Boîtier (7) selon l'une quelconque des revendications précédentes, **caractérisé en ce que** le segment de boîtier (10, 100, 210) est fabriqué au moyen d'un procédé additif, de préférence selon le procédé d'impression 3D.

9. Boîtier (7) selon l'une quelconque des revendications précédentes, **caractérisé en ce qu'**une parties du segment de boîtier (10, 100, 210), de la barrette centrale (145, 245) et/ou de la structure de soutien (191) présentent des cavités pour réaliser une structure de construction légère (109), de préférence au moyen d'une structure alvéolée, adaptée pour obtenir une réduction de poids.

10. Boîtier (7) selon l'une quelconque des revendications précédentes, **caractérisé en ce que** le boîtier (7) peut être relié au composant rotatif (1) par adhérence, de préférence au moyen d'un dispositif de serrage (25).

11. Boîtier (7) selon l'une quelconque des revendications précédentes, **caractérisé en ce qu'**au moins un segment de boîtier (10, 100) avec l'emplacement d'électronique (161) pour le module électronique (171) sont fabriqués selon un procédé additif, comme par exemple l'impression 3D, dans lequel des segments de boîtier autres que les éléments de base (210) ayant une étendue plus courte dans la direction circonférentielle (57) peuvent être fabriqués selon un procédé de fabrication différent, comme par exemple le moulage par injection.

12. Boîtier (7) selon l'une quelconque des revendications précédentes, **caractérisé en ce qu'**entre le logement (143) pour l'antenne (41) et la surface du composant rotatif est disposé un blindage contre le rayonnement électromagnétique, adapté pour blinder la cavité interne (150) et/ou l'emplacement d'électronique (61, 161) contre les ondes électromagnétiques.
